# EUROPEAN PATENT SPECIFICATION

(11) **EP 4 027 596 B1**
(45) Date of publication and mention of the grant of the patent: **27.08.2025**
(21) Application number: 20875893.8
(22) Date of filing: 07.09.2020
(51) Int. Cl.: H04L 45/02, H04L 45/28, H04L 45/74, H04L 45/741, H04L 12/28

(54) **ROUTE ADVERTISEMENT METHOD FOR IPV6 NETWORK, DEVICE, STORAGE MEDIUM AND SYSTEM**
ROUTENWERBUNGSVERFAHREN FÜR IPV6-NETZWERK, VORRICHTUNG, SPEICHERMEDIUM UND SYSTEM
PROCÉDÉ D'ANNONCE DE ROUTAGE POUR RÉSEAU IPV6, DISPOSITIF, SUPPORT DE STOCKAGE ET SYSTÈME

(30) Priority: 14.10.2019 CN 201910973902
(43) Date of publication of application: 13.07.2022
(73) Proprietor: ZTE Corporation, Shenzhen, Guangdong 518057 (CN)
(72) Inventor: HOU, Bo, Shenzhen, Guangdong 518057 (CN); XIE, Guanghua, Shenzhen, Guangdong 518057 (CN)
(74) Representative: Swindell & Pearson Limited
(86) International application number: PCT/CN2020/113810
(87) International publication number: WO 2021/073312

(56) References cited:
- EP-A1- 3 253 010
- CN-A- 101 730 074
- CN-A- 102 238 075
- CN-A- 104 519 097
- CN-A- 107 547 676
- CN-A- 109 981 813
- HAIBO WEN ALCATEL SHANGHAI BELL: "Port Identifier option for RS/RA messages in IPv6 access network; draft-wen-ipv6-rsra-opt-pid-01.txt", PORT IDENTIFIER OPTION FOR RS/RA MESSAGES IN IPV6 ACCESS NETWORK; DRAFT-WEN-IPV6-RSRA-OPT-PID-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 1, 23 June 2006 (2006-06-23), XP015047326
- TAN G YANG CHINA TELECOM C ZHOU HUAWEI TECHNOLOGIES J: "AAA for broadband access in IPv6 transition; draft-tan-v6ops-fast6-aaa-01.txt", AAA FOR BROADBAND ACCESS IN IPV6 TRANSITION; DRAFT-TAN-V6OPS-FAST6-AAA-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 1, 6 July 2011 (2011-07-06), pages 1 - 12, XP015077023

## Description

### TECHNICAL FIELD

The present disclosure relates to the field of communication technologies, and in particular, to a router advertisement method for an IPv6 network, a message transceiver device for performing the router advertisement method, a computer-readable storage medium, and a network system.

### BACKGROUND

With the development of the IPv6 network and virtualization technologies, telecom operators pay more and more attention to the high reliability of devices during the deployment of IPv6 services.

For a case in which a broadband remote access server (BRAS) or a virtual broadband remote access server (vBRAS) is used as a network access device, in a hot backup scenario or a pool backup scenario, the abnormal traffic charging or failure of accessing the network by a user terminal device frequently occurs when the user terminal device accesses the network.

Internet-Draft "Port Identifier option for RS/RA messages in IPv6 access network, draft-wen-ipv6-rsra-opt-pid-01.txt", Internet Engineering Task Force (IETF), from Haibo Wen, Alcatel Shanghai Bell, makes an extension to stateless address autoconfiguration (SAAC) mechanism by defining Port Identifier option for RS/RA messages in IPv6 access network. This option can make SAAC possible without upgrading access node and CPE to be layer 3 devices.

Internet-Draft "AAA for broadband access in IPv6 transition draft-tan-v6ops-fast6-aaa-01, Internet Engineering Task Force (IETF), from J. Tan, et al. provides access scenarios for FAST6 and analyzes the authentication, authorization and accounting operations in IPv4 access network, IPv6 access network and dual stack network separately for PPPoE case.

Patent literature (CN107547676A) provides an address processing method and device, applied to network equipment. The method comprises the following steps: acquiring a first IPv6 address; if the first IPv6 address is determined as a temporary address, detecting whether the network equipment has recorded the temporary address corresponding to an address prefix of the first IPv6 address at a first specified location; if the temporary address has not been recorded, recording the first IPv6 address at the first specified location; if the temporary address has been recorded, determining whether the time interval between the acquisition time of the first IPv6 address and the acquisition time of the temporary address corresponding to the address prefix of the first IPv6 address recorded at the first specified location most recently is less than a time threshold; and if the time interval is less than the time threshold, discarding the first IPv6 address or recording the first IPv6 address at a second specified location.

While the above publications may achieve their intended purposes, there is still a need for a new and improved a router advertisement method for IPv6 network.

### SUMMARY

The invention is set out in the appended set of claims.

The present disclosure provides a router advertisement method for an IPv6 network, a message transceiver device for performing the router advertisement method, a computer-readable storage medium, and a network system. By using the router advertisement method, a user terminal device can properly access the IPv6 network.

In view of this, according to an aspect of the present disclosure, a router advertisement method for an Internet Protocol Version 6 (IPv6) network is provided. The router advertisement method includes: acquiring a unique and fixed link-local address from a first broadband remote access server before a router advertisement is performed; and performing the router advertisement with a router advertisement message, where a source Internet Protocol (IP) address carried in the router advertisement message is fixedly set to the unique and fixed link-local address acquired from the first broadband remote access server; and where the unique and fixed link-local address is unique and fixed within a backup group.

According to another aspect of the present disclosure, a message transceiver device for an IPv6 network is provided. The message transceiver device includes: an addressing module configured to acquire a unique and fixed link-local address from a first broadband remote access server before a router advertisement is performed; and a router advertisement module configured to perform the router advertisement with a router advertisement message, and a source IP address carried in the router advertisement message is fixedly set to the unique and fixed link-local address acquired from the first broadband remote access server; and where the unique and fixed link-local address is unique and fixed within a backup group.

According to yet another aspect of the present disclosure, a computer-readable storage medium is provided. The computer-readable storage medium stores an executable program which, when executed by a processor, causes the processor to carry out the router advertisement method according to the present disclosure as described above.

According to yet another aspect of the present disclosure, a network system is provided. The network system includes a broadband remote access server and the message transceiver device according to the present disclosure as described above.

In addition, in the router advertisement method according to the present disclosure, processing of an uplink message sent by the user terminal device is eliminated, thereby simplifying the procedure of data processing.

### BRIEF DESCRIPTION OF DRAWINGS

The drawings are provided for a further understanding of the present disclosure, and constitute part of the specification. The drawings and specific implementations below are intended to illustrate the present disclosure, but constitute no limitation on the present disclosure, in which:
FIG. 1 depicts a flowchart of a router advertisement method in an implementation according to the present disclosure;
FIG. 2 depicts a schematic diagram of modules of a message transceiver device in an implementation according to the present disclosure; and
FIG. 3 depicts a schematic diagram of modules of a network system in an implementation according to the present disclosure.

### DETAILED DESCRIPTION

The following describes specific implementations of the present disclosure in detail with reference to the drawings. It should be understood that the described specific implementations herein are merely intended to describe and illustrate the present disclosure, but are not intended to limit the present disclosure.

The "broadband remote access server" mentioned in the present disclosure may be a BRAS, or may be a vBRAS.

The inventors of the present disclosure find, through repeated research, that the failure in accessing a network by a user terminal device in some cases results from the following facts.

When the user terminal device accesses an IPv6 network through a broadband remote access server, a next-hop discovery of the user terminal device is obtained through a router advertisement (RA) message sent by a network access device. The next-hop discovery of the user terminal device is the acquired source link-local address (LLA) of the RA message. The source LLA address is generated by performing an operation on a MAC address of an interface with a predetermined algorithm (for example, an EUI-64 algorithm). MAC addresses of different interfaces are usually different. On the premise that the broadband remote access server performs backup in a plurality of backup groups, a gateway discovered when the user terminal device accesses the network for the first time is required to be consistent with a gateway discovered by the user terminal device after backup switching. Otherwise, after the backup switching or before the backup switching occurs, a next-hop RA message of a backup interface (or a backup apparatus) causes a plurality of default routers with the same priority to be received by the user terminal device, and uplink traffic of the user terminal device may be sent to the backup interface (or the backup apparatus), resulting in abnormal charging for the traffic used by the user terminal device, or resulting in blockage of the uplink traffic of the user terminal device.

In view of this, according to an aspect of the present disclosure, a router advertisement method for an IPv6 network is provided. The router advertisement method includes S110 and S120.

At S110, a unique and fixed link-local address from a broadband remote access server is obtained when a router advertisement is to be performed.

At S120, the router advertisement is performed with a router advertisement message, where a source IP carried in the router advertisement message is the unique and fixed link-local address acquired from the broadband remote access server.

It should be noted that, the router advertisement method according to the present disclosure is performed by a message transceiver device.

For the BRAS, the "backup group" here refers to a backup group formed by a plurality of interfaces (or a plurality of sub-interfaces). For the vBRAS, the "backup group" here refers to a backup group formed by a plurality of apparatuses.

At S120, the source IP carried in the router advertisement message is the obtained unique and fixed link-local address in the broadband remote access server, and this is equivalent to encapsulating the router advertisement message with the obtained unique and fixed link-local address in the broadband remote access server.

In the present disclosure, it is not intended to particularly limit the trigger condition "when router advertisement is to be performed".

For example, "when router advertisement is to be performed" may be an occasion for periodically multicasting the router advertisement message before the user terminal device accesses the network. Correspondingly, the "router advertisement message" includes an RA message periodically multicasted by the message transceiver device before the user terminal device accesses the network. In this case, S120 may be performed by periodically multicasting the RA message that carries the source IP being the obtained unique and fixed link-local address from the broadband remote access server.

For another example, "when router advertisement is to be performed" may alternatively be an occasion at which the message transceiver device replies to the user terminal device with a downlink router advertisement message when the user terminal device accesses the network for the first time and after the user terminal device accesses the network. Correspondingly, the router advertisement message is the downlink RA message to be replied to the user terminal device when the user terminal device accesses the network for the first time and after the user terminal device accesses the network. In this case, S120 may be performed by replying to the user terminal device with the downlink RA message that carries the source IP being the obtained unique and fixed link-local address from the broadband remote access server.

In the present disclosure, the user terminal device may be a device such as a set-top box.

In the router advertisement method according to the present disclosure, the obtained unique and fixed link-local address (which is usually an interface address or a device address) in the broadband remote access server serves as the source IP. Therefore, regardless of whether before the user terminal device accesses the network or after the user terminal device accesses the network, the source IP of the router advertisement message sent by the message transceiver device to the user terminal device remains unchanged, and a next-hop address of the user terminal device remains unchanged.

The broadband remote access server usually performs backup according to a virtual router redundancy protocol (VRRP). After receiving the router advertisement message sent by the message transceiver device, the user terminal device learns a next-hop MAC address through the VRRP, where the learned next-hop MAC address is a virtual MAC address of the VRRP. Therefore, in a switch accessed by the user terminal device, the virtual MAC address forward by the switch ensures that the uplink traffic of the user terminal device can be sent to the master interface (or the master apparatus), so that the user terminal device can access the IPv6 network. Because the uplink traffic of the user terminal device can always be sent to the current master interface (or master apparatus), it is ensured that the user terminal device can stably access the IPv6 network, and it is ensured that accurate traffic charging on the user terminal device.

In addition, in the router advertisement method provided in the present disclosure, processing of an uplink message sent by the user terminal device is eliminated, thereby simplifying the procedure of data processing.

In the present disclosure, it is not intended to limit the obtained link-local address described at S110, provided that the link-local address is a unique and fixed link-local address in the broadband remote access server.

In an implementation, S110 includes: obtaining the unique and fixed link-local address from a backup group based on a granularity of the backup group.

In the present disclosure, it is not intended to limit the backup scenario of the broadband remote access server. For example, in case that the broadband remote access server is a BRAS, a backup scenario of the BRAS may be a VRRPv4-protocol-based hot backup scenario or a VRRPv6-protocol-based hot backup scenario. In case that the broadband remote access server is a vBRAS, a backup scenario may be a pool backup scenario. It shall be appreciated that, the present disclosure is not limited to the foregoing three backup scenarios.

As a first implementation, the backup scenario of the BRAS is a VRRPv4-protocol-based hot backup scenario. It should be noted that, in the VRRPv4-protocol-based hot backup scenario, one subscriber information backup (SIB) instance is one backup group. To obtain the "unique and fixed link-local address", the same link-local address is to be configured in a SIB group of the BRAS, and the link-local address is the "unique and fixed link-local address" in the backup group. Correspondingly, at S110, the unique and fixed link-local address of the backup group may include the link-local address configured in the subscriber information backup instance.

In the first implementation as described above, the unique and fixed link-local address is applied in the encapsulation, before the user terminal device accesses the network, of a source IP field in an IPv6 header of an RA message periodically multicasted on a current master interface in the backup group of the BRAS (in other words, to make sure the source IP is the unique and fixed link-local address). A source MAC address in a layer-2 header is encapsulated into a virtual MAC address of VRRPv4. Therefore, the encapsulation of the periodically multicasted RA message sent by the master interface in the corresponding SIB instance remains unchanged regardless of changes of master and backup apparatuses in the backup group.

In the first implementation as described above, the fixed and unique link-local address is further applied in the encapsulation, after the user terminal device accesses the network for the first time, of a source IP field in an IPv6 header of an RA message replied by the BRAS to the user terminal device (in other words, to make sure that the source IP is the unique and fixed link-local address). A source MAC address in a layer-2 header is encapsulated into a virtual MAC address of the VRRP. of the encapsulation of the RA message replied by the BRAS to the user terminal device in the SIB instance remains unchanged regardless of changes of master and backup apparatuses in the backup group.

In the implementation as described above, in a process of learning a MAC address (NS/NA) of a gateway by the user terminal device, both the source MAC address in the layer-2 header of the NA message replied by the BRAS to the user terminal device and a target link-layer address in ICMPv6 are virtual MAC addresses of the VRRP. To ensure the consistency of interaction between a plurality of protocols, in the DHCPv6 interaction between the BRAS and the user terminal device, the source MAC of the layer-2 header and the source IP of the IPv6 header of the advertisement message or the reply message replied by the BRAS to the user terminal device are encapsulated in the same manner as that of the RA message.

By means of the master/backup selection mechanism and the master/ backup switching mechanism in the VRRPv4 protocol, a discovered gateway by the user terminal device can only be a link-local address configured in a SIB instance to which the user terminal device belongs, so that the uplink traffic of the user terminal device can always be sent to the master interface in the backup group.

As a second implementation where the broadband remote access server is the BRAS, the backup scenario of the BRAS is a VRRPv6-protocol-based hot backup scenario. Correspondingly, at S110, the unique and fixed link-local address of the backup group includes a virtual IP address of a VRRPv6 protocol associated with the user terminal device or a link-local address configured in a subscriber information backup instance.

It should be noted that, in the VRRPv6-protocol-based hot backup scenario, a SIB instance to which a single-stack or dual-stack user terminal device of BRASv6 belongs is associated with a VRRPv6 group. A BRAS access module in the BRAS for processing a user-terminal-online message detects a virtual IP address of VRRPv6, and the VRRPv6 protocol requires the virtual IP address to be a link-local address. Therefore, in the VRRPv6-protocol-based hot backup scenario, the virtual IP address of the VRRPv6 protocol associated with the user terminal device may be directly used as a unique and fixed link-local address in each backup group.

In the present disclosure, the unique and fixed link-local address of the backup group at S110 may be determined by setting a priority of the virtual IP address of the VRRPv6 protocol associated with the user terminal device or a priority of the link-local address in the SIB instance of the backup group.

In an implementation, the priority of the link-local address configured in the subscriber information backup instance may be set to be higher than that of the virtual IP address of the VRRPv6 protocol associated with the user terminal device. At S110, the unique and fixed link-local address from the backup group includes the link-local address configured in the subscriber information backup instance.

By means of the master/backup selection and switching mechanism of the VRRPv6 protocol, a discovered gateway by the user terminal device can only be the link-local address configured in the SIB instance. Therefore, the uplink traffic of the user terminal device can always be sent to the master apparatus.

In the second implementation as described above, the unique and fixed link-local address is applied in the encapsulation, before the user terminal device accesses the network, of a source IP field in an IPv6 header of an RA message periodically multicasted on a current master interface. A source MAC address in a layer-2 header is encapsulated into a virtual MAC address of VRRPv6. The encapsulation of the periodically multicasted RA message sent by the master interface in the corresponding SIB instance remains unchanged regardless of changes of master and backup apparatuses. In addition, when the user terminal device accesses the network for the first time and after the user terminal device accesses the network, a source IP field in an IPv6 header of an RA message replied by the BRAS to the user terminal device through the message transceiver device is encapsulated by the unique and fixed link-local address. A source MAC address in a layer-2 header is encapsulated into a virtual MAC address of the VRRP. The encapsulation of the RA message replied by the BRAS to the user terminal device in the corresponding SIB instance remains unchanged regardless of changes of master and backup apparatuses.

In addition, in the implementation as described above, in a process of learning a MAC address (NS/NA) of a gateway by the user terminal device, both the source MAC address in the layer-2 header of the NA message replied by the BRAS to the user terminal device through the message transceiver device and a target link-layer address in ICMPv6 are virtual MAC addresses of the VRRP. To ensure the consistency of interaction between a plurality of protocols, in the DHCPv6 interaction between the BRAS and the user terminal device, the source MAC of the layer-2 header and the source IP of the IPv6 header of the advertisement message or the reply message replied by the BRAS to the user terminal device are encapsulated in the same manner as that of the RA message.

As a third implementation of the present disclosure, the broadband remote access server includes the vBRAS. Correspondingly, the backup scenario of the vBRAS includes a UP pool backup scenario. At S110, the unique and fixed link-local address of the backup group includes a link-local address of the backup group configured on a control plane of the vBRAS.

The control plane (CP) and a forwarding plane (UP) of the vBRAS are deployed separately, and UP backup groups are managed and configured on the control plane of the vBRAS. Each backup group manages a group of (two or more) interfaces. A certain quantity of virtual MAC addresses are allocated to each backup group on the control plane of the vBRAS. For one backup group, virtual MAC addresses of the group are evenly allocated to all interfaces in the group. According to an algorithm, a user terminal device can be in a one-to-one correspondence only with a virtual MAC address in the group. The interface to which the virtual MAC address in the correspondence is allocated, is the interface via which the user terminal device accesses the network. Virtual MAC addresses in the group are reallocated at any time based on a quantity of available interfaces in the group. In this way, user terminal devices are evenly allocated to the interfaces in the group, and the interfaces are backup to each other. This solution is called "UP pool backup".

In the implementation, link-local addresses of a plurality of physical interfaces in a backup group are logically formed as one configurable link-local address, to cooperate with ARP advertisement of MAC address update in an interface in the backup group. Regardless of an interface, in the backup group, through which the user terminal device accesses the network, the gateway discovered by the user terminal device can only be the link-local address configured in the backup group. Therefore, the uplink traffic of the user terminal device can always be sent to the master apparatus.

In the UP pool backup scenario, the apparatuses in all backup groups are not classified into master or backup apparatuses, and an interface of each device would send an RA message. A source IP field in an IPv6 header of a periodically multicasted RA message in an interface of each device is encapsulated with the link-local address. A source MAC address in a layer-2 header is encapsulated into any virtual MAC address allocated to the interface.

When the user terminal device accesses the network for the first time and after the user terminal device accesses the network, the source IP field in the IPv6 header of the RA message replied by the BRAS to the user terminal device through the message transceiver device is encapsulated with the link-local address. The source MAC address in the layer-2 header is encapsulated into a virtual MAC address that is in a one-to-one correspondence with the user terminal device. The encapsulation of the RA message remains unchanged regardless of changes of the interface to which the virtual MAC address is allocated in the backup group.

In the process of learning the MAC address (NS/NA) of the gateway by the user terminal device, both the source MAC address in the layer-2 header of the NA message replied by the message transceiver device to the user terminal device and the target link-layer address in ICMPv6 are virtual MAC addresses that are in a one-to-one correspondence with the user terminal device. To ensure the consistency of interaction between a plurality of protocols, in the DHCPv6 interaction between the BRAS and the user terminal device, the source MAC of the layer-2 header and the source IP of the IPv6 header of the advertisement message or the reply message replied by the BRAS to the user terminal device are encapsulated in the same manner as that of the RA message.

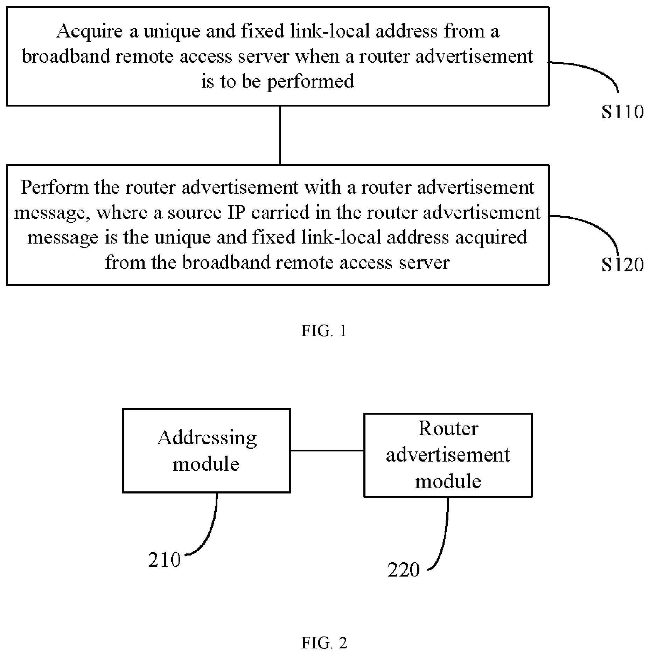

According to another aspect of the present disclosure, a message transceiver device for an IPv6 network is provided. As shown in FIG. 2, the message transceiver device includes an addressing module 210 and a router advertisement module 220.

The message transceiver device according to the present disclosure is configured to perform the router advertisement method according to the aspect of the present disclosure as described above. The addressing module 210 is configured to perform S110, that is, the addressing module 210 is configured to obtain a unique and fixed link-local address from a broadband remote access server when router advertisement is to be performed. The router advertisement module 220 is configured to perform S120, that is, the router advertisement module 220 is configured to perform the router advertisement with a router advertisement message, where a source IP carried in the router advertisement message is the unique and fixed link-local address acquired from the broadband remote access server.

The operating principle and beneficial effects of the router advertisement method have been described in detail above, and will not be repeatedly described in this aspect again.

As described above, the router advertisement message may be an RA message periodically multicasted before the user terminal device accesses the network, or may be a downlink RA message replied to the user terminal device when the user terminal device accesses the network for the first time or after the user terminal device accesses the network.

In an embodiment, when the broadband remote access server is a BRAS, and a backup scenario of a backup group is a VRRPv4-protocol-based hot backup scenario, the addressing module 210 is configured to apply a link-local address configured in a subscriber information backup instance as a unique and fixed link-local address of the backup group.

In an embodiment, in case that the broadband remote access server is a BRAS, and a backup scenario of a backup group is a VRRPv6-protocol-based hot backup scenario, the addressing module 210 is configured to apply a virtual IP address of a VRRPv6 protocol associated with the user terminal device as a unique and fixed link-local address of the backup group, or apply a link-local address configured in a subscriber information backup instance as a unique and fixed link-local address of the backup group.

In an embodiment, in case that the broadband remote access server is a vBRAS, and a backup scenario of a backup group is a pool backup scenario, the addressing module 210 is configured to apply a link-local address of a backup group configured on a control plane of the vBRAS as a unique and fixed link-local address of the backup group. The addressing module 210 may apply, a link-local address that is in a pool backup group to which a user terminal device belongs and that is detected by a BRAS access module for processing a user-terminal-online message, as the unique and fixed link-local address of the backup group.

According to yet another aspect of the present disclosure, a computer-readable storage medium is provided. The computer-readable storage medium stores an executable program, where the executable program can perform the router advertisement method according to the present disclosure.

The computer-readable storage medium includes volatile, non-volatile, removable, and non-removable media implemented in any method or technology configured to store information (such as computer-readable instructions, a data structure, a program module, or other data). The computer-readable storage medium includes, but is not limited to a RAM, a ROM, an EEPROM, a flash memory or another memory technology, a CD-ROM, a digital versatile disk (DVD) or other optical disk storage, a magnetic cartridge, a magnetic tape, a magnetic disk storage or another magnetic storage medium, or any other medium that can be configured to store expected information and that can be accessed by a computer.

According to a fourth aspect of the present disclosure, a network system is provided. The network system includes a broadband remote access server and the message transceiver device according to the present disclosure.

In an embodiment, the message transceiver device may be integrated with the broadband remote access server.

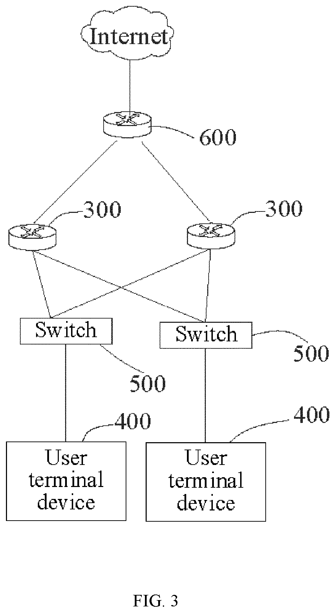

As shown in FIG. 3, the network system includes two BRASs 300. Each BRAS 300 is connected to two switches 500, and each switch 500 is connected to a corresponding user terminal device 400.

In the implementation shown in FIG. 3, the network system further includes a core router 600. The BRAS 300 issues a router advertisement message to the user terminal device 400.

The following describes how a unique and fixed link-local address is configured for a backup group with reference to specific scenarios.

In case that the broadband remote access server is a BRAS, the two BRASs form a backup group. The same link-local address is configured in SIB groups of the two BRASs (for ease of description, hereinafter referred to as a device 1 and a device 2) that form the backup group, and the link-local address serves as the "unique and fixed link-local address". The configuration may be particularly performed as follows.

```
    Configuration of the device 1:
    sib-instance 1
    default-gateway fe80::1/10
    Configuration of the device 2:
    sib-instance 1
    default-gateway fe80::1/10
```

In case that the broadband remote access server is a vBRASv6, because SIB instances of the two devices may be logically formed as one management group on a control plane of the vBRAS, the "unique and fixed" link-local address is configured in the management group on the control plane of the vBRAS. The configuration may be particularly performed as follows.

```
    Configuration on the control plane of the vBRAS:
    af-pool hotback
         default-gateway fe80::1/10
         af-node u02
           bind sib-instance 1
         $
         af-node u06
           bind sib-instance 1
         $
```

In case that the broadband remote access server is a vBRAS, in a pool backup scenario, a link-local address may be configured for each pool backup group on a control plane of the vBRAS. The configuration may be particularly performed as follows.

```
    Configuration on the control plane of the vBRAS:
    af-pool 1 pool-id 1
         default-gateway fe80::1/10
         af-node u02
           add-interface type uni interface xgei-0/2/1/2
         $
         af-node u06
           add-interface type uni interface xgei-0/2/1/2
         $
         af-node u08
           add-interface type uni interface xgei-0/2/1/2
         $
```

In the router advertisement method according to the present disclosure, the obtained unique and fixed link-local address in the broadband remote access server serves as the source IP. Therefore, regardless of whether before the user terminal device accesses the network or after the user terminal device accesses the network, the source IP of the router advertisement message sent by a network access device (which may be a master apparatus or a master interface, or may be a backup apparatus or a backup interface) in the backup group to the user terminal remains unchanged, and a next-hop address of the user terminal device remains unchanged.

A plurality of network access devices usually perform multi-device backup according to a virtual router redundancy protocol (VRRP). After receiving an encapsulated router advertisement message sent by a router, the user terminal device learns a next-hop MAC address through the VRRP, where the learned next-hop MAC address is a virtual MAC address of the VRRP. Therefore, in a switch accessed by the user terminal device, the virtual MAC address forward by the switch, ensures that uplink traffic of the user terminal device can be sent to the master apparatus, so that the user terminal device can access the network. Because the uplink traffic of the user terminal device can always be sent to the current master apparatus, it is ensured that the user terminal device can stably access the network, and it is ensured that accurate traffic charging on the user terminal device.

It is to be understood that the foregoing implementations are merely some implementations used to describe principles of the present disclosure. However, the present disclosure is not limited thereto.

## Claims

1. A router advertisement method for an Internet Protocol Version 6, IPv6 network, comprising,
acquiring a unique and fixed link-local address from a first broadband remote access server before a router advertisement is performed (S110); and
performing the router advertisement with a router advertisement message, wherein a source Internet Protocol, IP, address carried in the router advertisement message is fixedly set to the unique and fixed link-local address acquired from the first broadband remote access server (S120),
wherein the unique and fixed link-local address is unique and fixed within a backup group.

2. The router advertisement method of claim 1, wherein,
the router advertisement message comprises a Router Advertisement, RA, message periodically multicasted before access of the network by a user terminal device, and performing the router advertisement with a router advertisement message comprises: periodically multicasting the RA message that carries the source IP address being the unique and fixed link-local address acquired from the first broadband remote access server; and/or
the router advertisement message comprises a downlink RA message replied to the user terminal device in response to initial access of the network by the user terminal device or subsequent to an access of the network by the user terminal device, and performing the router advertisement with a router advertisement message comprises: replying to the user terminal device with the downlink RA message that carries the source IP address being the unique and fixed link-local address acquired from the first broadband remote access server.

3. The router advertisement method of claim 1 or claim 2, wherein acquiring the unique and fixed link-local address from the first broadband remote access server comprises,
acquiring the unique and fixed link-local address from the backup group based on a granularity of the backup group;
wherein, the backup group comprises a group of apparatus comprising the first broadband remote access server, or the backup group comprises a group of interfaces of the first broadband remote access server.

4. The router advertisement method of claim 3, wherein the first broadband remote access server comprises a Broadband Remote Access Server, BRAS, a backup scenario of the BRAS comprises a Virtual Router Redundancy Protocol Version 4, VRRPv4, -protocol-based hot backup scenario, and during acquisition of the unique and fixed link-local address, as a source IP address, from a backup group based on the granularity of the backup group, the unique and fixed link-local address from the backup group comprises a link-local address configured in a subscriber information backup, SIB, instance.

5. The router advertisement method of claim 3, wherein the first broadband remote access server is a BRAS, a backup scenario of the BRAS comprises a Virtual Router Redundancy Protocol Version 6, VRRPv6, -protocol-based hot backup scenario, and during acquisition of the unique and fixed link-local address, as a source IP address, from a backup group based on the granularity of the backup group, the unique and fixed link-local address from the backup group comprises a virtual IP address of a VRRPv6 protocol associated with the user terminal device, or a link-local address configured in an SIB instance.

6. The router advertisement method of claim 5, wherein during acquisition of the unique and fixed link-local address, as a source IP address, from the backup group based on the granularity of the backup group, the unique and fixed link-local address from the backup group comprises the link-local address configured in the SIB instance.

7. The router advertisement method of claim 3, wherein the first broadband remote access server is a virtual broadband remote access server, vBRAS, a backup scenario of the vBRAS comprises a UP pool backup scenario, and during acquisition of the unique and fixed link-local address, as a source IP address, from the backup group based on the granularity of the backup group, the unique and fixed link-local address from the backup group comprises, a link-local address of the backup group configured on a control plane of the vBRAS.

8. A message transceiver device for an Internet Protocol Version 6, IPv6 network, comprising,
an addressing module (210) configured to acquire a unique and fixed link-local address from a first broadband remote access server before a router advertisement is performed; and
a router advertisement module (220) configured to perform the router advertisement with a router advertisement message, wherein a source Internet Protocol, IP, address carried in the router advertisement message is fixedly set to the unique and fixed link-local address acquired from the first broadband remote access server;
wherein the unique and fixed link-local address is unique and fixed within a backup group.

9. A computer-readable storage medium, storing an executable program which, when executed by a processor, causes the processor to carry out the router advertisement method of any one of claims 1 to 7.

10. A network system, comprising a broadband remote access server and the message transceiver device of claim 8.

## Patentansprüche

1. Router-Werbungsverfahren für ein Internetprotokoll-Version-6-Netzwerk, IPv6-Netzwerk, umfassend:
Erfassen einer eindeutigen und festen lokalen Linkadresse von einem ersten Breitband-Zugangsserver, bevor eine Router-Werbung durchgeführt wird (S110); und
Durchführen der Router-Werbung mit einer Router-Werbungsnachricht, wobei eine Quell-Internetprotokoll-Adresse, Quell-IP-Adresse, die in der Router-Werbungsnachricht mitgeführt wird, fest auf die eindeutige und feste lokale Linkadresse eingestellt ist, die von dem ersten Breitband-Zugangsserver (S120) erfasst wurde, wobei die eindeutige und feste lokale Linkadresse innerhalb einer Backup-Gruppe eindeutig und fest ist.

2. Router-Werbungsverfahren nach Anspruch 1, wobei
die Router-Werbungsnachricht eine Router-Werbungsnachricht, RA, umfasst, die vor dem Zugang zu dem Netzwerk durch eine Benutzerendgerätevorrichtung periodisch mehrfach übertragen wird, und das Durchführen der Router-Werbung mit einer Router-Werbungsnachricht Folgendes umfasst: periodisches mehrfaches Übertragen der RA-Nachricht, welche die Quell-IP-Adresse mitführt, welche die eindeutige und feste lokale Linkadresse ist, die von dem ersten Breitband-Zugangsserver erfasst wurde; und/oder
die Router-Werbungsnachricht eine Downlink-RA-Nachricht umfasst, die als Reaktion auf einen anfänglichen Zugang zu dem Netzwerk durch die Benutzerendgerätevorrichtung oder im Anschluss auf einen Zugang zu dem Netzwerk durch die Benutzerendgerätevorrichtung an die Benutzerendgerätevorrichtung geantwortet wird, und das Durchführen der Router-Werbung mit einer Router-Werbungsnachricht Folgendes umfasst: Antworten auf die Benutzerendgerätevorrichtung mit der Downlink-RA-Nachricht, welche die Quell-IP-Adresse mitführt, welche die eindeutige und feste lokale Linkadresse ist, die von dem ersten Breitband-Zugangsserver erfasst wurde.

3. Router-Werbungsverfahren nach Anspruch 1 oder Anspruch 2, wobei das Erfassen der eindeutigen und festen lokalen Linkadresse von dem ersten Breitband-Zugangsserver Folgendes umfasst:
Erfassen der eindeutigen und festen lokalen Linkadresse von der Backup-Gruppe auf Grundlage einer Granularität der Backup-Gruppe;
wobei die Backup-Gruppe eine Gruppe von Einrichtungen umfasst, die den ersten Breitband-Zugangsserver umfassen, oder die Backup-Gruppe eine Gruppe von Schnittstellen des ersten Breitband-Zugangsservers umfasst.

4. Router-Werbungsverfahren nach Anspruch 3, wobei der erste Breitband-Zugangsserver einen Breitband-Zugangsserver, BRAS, umfasst, ein Backup-Szenario des BRAS ein protokollbasiertes Hot-Backup-Szenario eines Virtual Router Redundancy Protocol Version 4, VRRPv4, umfasst und während der Erfassung der eindeutigen und festen lokalen Linkadresse als Quell-IP-Adresse von einer Backup-Gruppe auf Grundlage der Granularität der Backup-Gruppe die eindeutige und feste lokale Linkadresse von der Backup-Gruppe eine lokale Linkadresse umfasst, die in einer Subscriber-Information-Backup-Instanz, SIB, konfiguriert ist.

5. Router-Werbungsverfahren nach Anspruch 3, wobei der erste Breitband-Zugangsserver ein BRAS ist, ein Backup-Szenario des BRAS ein protokollbasiertes Hot-Backup-Szenario eines Virtual Router Redundancy Protocol Version 6, VRRPv6, umfasst und während der Erfassung der eindeutigen und festen lokalen Linkadresse als Quell-IP-Adresse von einer Backup-Gruppe auf Grundlage der Granularität der Backup-Gruppe die eindeutige und feste lokale Linkadresse von der Backup-Gruppe eine virtuelle IP-Adresse eines VRRPv6-Protokolls, das der Benutzerendgerätevorrichtung zugeordnet ist, oder eine lokale Linkadresse umfasst, die in einer SIB-Instanz konfiguriert ist.

6. Router-Werbungsverfahren nach Anspruch 5, wobei während der Erfassung der eindeutigen und festen lokalen Linkadresse als Quell-IP-Adresse von der Backup-Gruppe auf Grundlage der Granularität der Backup-Gruppe die eindeutige und feste lokale Linkadresse von der Backup-Gruppe die lokale Linkadresse umfasst, die in der SIB-Instanz konfiguriert ist.

7. Router-Werbungsverfahren nach Anspruch 3, wobei der erste Breitband-Zugangsserver ein virtueller Breitband-Zugangsserver, vBRAS, ist, ein Backup-Szenario des vBRAS ein UP-Pool-Backup-Szenario umfasst und während der Erfassung der eindeutigen und festen lokalen Linkadresse als eine Quell-IP-Adresse von der Backup-Gruppe auf Grundlage der Granularität der Backup-Gruppe die eindeutige und feste lokale Linkadresse von der Backup-Gruppe eine lokale Linkadresse der Backup-Gruppe umfasst, die auf einer Steuerebene des vBRAS konfiguriert ist.

8. Nachrichtensendeempfängervorrichtung für ein Internetprotokoll-Version-6-Netzwerk, IPv6-Netzwerk, umfassend:
ein Adressierungsmodul (210), das dazu konfiguriert ist, eine eindeutige und feste lokale Linkadresse von einem ersten Breitband-Zugangsserver zu erfassen, bevor eine Router-Werbung durchgeführt wird; und
ein Router-Werbungsmodul (220), das dazu konfiguriert ist, die Router-Werbung mit einer Router-Werbungsnachricht durchzuführen, wobei eine Quell-Internetprotokoll-Adresse, Quell-IP-Adresse, die in der Router-Werbungsnachricht mitgeführt wird, fest auf die eindeutige und feste lokale Linkadresse eingestellt ist, die von dem ersten Breitband-Zugangsserver erfasst wurde,
wobei die eindeutige und feste lokale Linkadresse innerhalb einer Backup-Gruppe eindeutig und fest ist.

9. Computerlesbares Speichermedium, auf dem ein ausführbares Programm gespeichert ist, das bei Ausführung durch einen Prozessor den Prozessor dazu veranlasst, das Router-Werbungsverfahren nach einem der Ansprüche 1 bis 7 auszuführen.

10. Netzwerksystem, umfassend einen Breitband-Zugangsserver und die Nachrichtensendeempfängervorrichtung nach Anspruch 8.

## Revendications

1. Procédé d'annonce de routeur pour un réseau Protocole Internet Version 6, IPv6, comprenant :
l'acquisition d'une adresse lien-local unique et fixe à partir d'un premier serveur d'accès à distance à large bande avant qu'une annonce de routeur ne soit effectuée (S110) ; et
l'exécution de l'annonce de routeur avec un message d'annonce de routeur, dans lequel une adresse Protocole Internet, IP, source transportée dans le message d'annonce de routeur est définie de manière fixe sur l'adresse lien-local unique et fixe acquise à partir du premier serveur d'accès à distance à large bande (S120),
dans lequel l'adresse lien-local unique et fixe est unique et fixe dans un groupe de sauvegarde.

2. Procédé d'annonce de routeur selon la revendication 1, dans lequel,
le message d'annonce de routeur comprend un message d'annonce de routeur, RA, multidiffusé périodiquement avant l'accès au réseau par un dispositif de terminal utilisateur, et l'exécution de l'annonce de routeur avec un message d'annonce de routeur comprend : la multidiffusion périodique du message RA qui transporte l'adresse IP source étant l'adresse lien-local unique et fixe acquise à partir du premier serveur d'accès à distance à large bande ; et/ou
le message d'annonce de routeur comprend un message RA de liaison descendante répondu au dispositif de terminal utilisateur en réponse à un accès initial au réseau par le dispositif de terminal utilisateur ou à la suite d'un accès au réseau par le dispositif de terminal utilisateur, et l'exécution de l'annonce de routeur avec un message d'annonce de routeur comprend : la réponse au dispositif de terminal utilisateur avec le message RA de liaison descendante qui transporte l'adresse IP source étant l'adresse lien-local unique et fixe acquise à partir du premier serveur d'accès à distance à large bande.

3. Procédé d'annonce de routeur selon la revendication 1 ou la revendication 2, dans lequel l'acquisition de l'adresse lien-local unique et fixe à partir du premier serveur d'accès à distance à large bande comprend,
l'acquisition de l'adresse lien-local unique et fixe à partir du groupe de sauvegarde sur la base d'une granularité du groupe de sauvegarde ;
dans lequel, le groupe de sauvegarde comprend un groupe d'appareils comprenant le premier serveur d'accès à distance à large bande, ou le groupe de sauvegarde comprend un groupe d'interfaces du premier serveur d'accès à distance à large bande.

4. Procédé d'annonce de routeur selon la revendication 3, dans lequel le premier serveur d'accès à distance à large bande comprend un serveur d'accès à distance à large bande, BRAS, un scénario de sauvegarde du BRAS comprend un scénario de sauvegarde à chaud basé sur un protocole Protocole de Redondance de Routeur Virtuel Version 4, VRRPv4, et pendant l'acquisition de l'adresse lien-local unique et fixe, en tant qu'adresse IP source, à partir d'un groupe de sauvegarde sur la base de la granularité du groupe de sauvegarde, l'adresse lien-local unique et fixe à partir du groupe de sauvegarde comprend une adresse lien-local configurée dans une instance de sauvegarde d'informations d'abonné, SIB.

5. Procédé d'annonce de routeur selon la revendication 3, dans lequel le premier serveur d'accès à distance à large bande est un BRAS, un scénario de sauvegarde du BRAS comprend un scénario de sauvegarde à chaud basé sur un protocole Protocole de Redondance de Routeur Virtuel Version 6, VRRPv6, et pendant l'acquisition de l'adresse lien-local unique et fixe, en tant qu'adresse IP source, à partir d'un groupe de sauvegarde sur la base de la granularité du groupe de sauvegarde, l'adresse lien-local unique et fixe à partir du groupe de sauvegarde comprend une adresse IP virtuelle d'un protocole VRRPv6 associé au dispositif de terminal utilisateur, ou une adresse lien-local configurée dans une instance SIB.

6. Procédé d'annonce de routeur selon la revendication 5, dans lequel pendant l'acquisition de l'adresse lien-local unique et fixe, en tant qu'adresse IP source, à partir du groupe de sauvegarde sur la base de la granularité du groupe de sauvegarde, l'adresse lien-local unique et fixe à partir du groupe de sauvegarde comprend l'adresse lien-local configurée dans l'instance SIB.

7. Procédé d'annonce de routeur selon la revendication 3, dans lequel le premier serveur d'accès à distance à large bande est un serveur d'accès à distance à large bande virtuel, vBRAS, un scénario de sauvegarde du vBRAS comprend un scénario de sauvegarde de pool UP, et pendant l'acquisition de l'adresse lien-local unique et fixe, en tant qu'adresse IP source, à partir du groupe de sauvegarde sur la base de la granularité du groupe de sauvegarde, l'adresse lien-local unique et fixe à partir du groupe de sauvegarde comprend une adresse lien-local du groupe de sauvegarde configurée sur un plan de contrôle du vBRAS.

8. Dispositif émetteur-récepteur de messages pour un réseau Protocole Internet Version 6, IPv6, comprenant :
un module d'adressage (210) configuré pour acquérir une adresse lien-local unique et fixe à partir d'un premier serveur d'accès à distance à large bande avant qu'une annonce de routeur ne soit effectuée ; et
un module d'annonce de routeur (220) configuré pour effectuer l'annonce de routeur avec un message d'annonce de routeur, dans lequel une adresse Protocole Internet, **IP,** source transportée dans le message d'annonce de routeur est définie de manière fixe sur l'adresse lien-local unique et fixe acquise à partir du premier serveur d'accès à distance à large bande ;
dans lequel l'adresse lien-local unique et fixe est unique et fixe dans un groupe de sauvegarde.

9. Support de stockage lisible par ordinateur, stockant un programme exécutable qui, lorsqu'il est exécuté par un processeur, amène le processeur à effectuer le procédé d'annonce de routeur selon l'une quelconque des revendications 1 à 7.

10. Système de réseau, comprenant un serveur d'accès à distance à large bande et le dispositif émetteur-récepteur de messages selon la revendication 8.
